# EUROPEAN PATENT APPLICATION

(11) **EP 1 918 816 A2**
(43) Date of publication of application: **07.05.2008**
(21) Application number: 07008536.0
(22) Date of filing: 26.04.2007
(51) Int. Cl.: G06F 9/48, H04N 5/00

(54) **Systems and methods for operation scheduling**

(30) Priority: 06.11.2006 CN 200610143357
(71) Applicant: BenQ Corporation, Gueishan Taoyuan 333 (TW)
(72) Inventor: Chang, Chih-Cheng, Keelung City 204 (TW)
(74) Representative: Brandenburger, Karin

(57) **Abstract**

An operation scheduling method employed in a display apparatus is provided. The display apparatus comprises first and second functions, and each function corresponds to an instruction set. Each instruction set comprises at least one instruction block and corresponds to a block execution state. The method comprises: (a) determining whether the first function is activated, and if so, proceeding to step (b), otherwise, to step (d); (b) retrieving the block execution state of the first function; (c) executing the instruction block of the first function according to the retrieved block execution state of the first function; (d) determining whether the second function is activated, and if so, proceeding to step (e), otherwise, to step (a); (e) retrieving the block execution state of the second function; (f) executing the instruction block of the second function according to the retrieved block execution state of the second function; and (g) returning to (a).

## Description

### BACKGROUND

The invention relates to operation scheduling, and more particularly, systems and methods for operation scheduling employed in display apparatuses.

Televisions (TVs) typically comprise various functions for switching between programs, swapping program configuration data, installing programs automatically, updating programs, and other functions. Only one function, however, can be executed at one time. For example, when executing an automated program update to detect frequencies carrying program data, and update a program list, other programs cannot be tuned in. An operation scheduling system and method, simulating an operating environment enabling simultaneous execution of multiple functions is desirable.

### SUMMARY

The invention provides systems and methods for operation scheduling. Various functions executed by users are grouped into different priorities, and instructions of each function are divided into multiple instruction blocks. The method for operation scheduling executes instruction blocks of functions in a particular order to simulate an operating environment capable of simultaneously executing multiple functions. The operation scheduling for "multitasking simulation" employed in a display apparatus is achieved by "time-sharing with priorities". An instruction block of a function with a higher priority can be loaded and executed when execution of an instruction block of the prior function with the same priority is complete. An instruction block of a function with a lower priority can be loaded and executed the following criteria are met: when execution of instruction blocks of all functions requiring execution with a higher priority is complete, a timer has reached a particular time, and execution of an instruction block of the prior function with the same priority is complete. Execution of functions with a lower priority requires that more conditions be satisfied. Thus, more instruction blocks of functions with a higher priority are ideally executed during a given time period. The functions may be grouped into high priority and low priority functions, or may be grouped into more than two priorities according to actual application. Only two priorities are used for the purposes of describing the invention.

Methods for operation scheduling employing in a display apparatus are provided. The display apparatus comprises first and second functions, and each function corresponds to an instruction set. Each instruction set comprises at least one instruction block and corresponds to a block execution state. The method comprises: (a) determining whether the first function is activated, and if so, proceeding to step (b), otherwise, to step (d); (b) retrieving the block execution state of the first function; (c) executing the instruction block of the first function according to the retrieved block execution state of the first function; (d) determining whether the second function is activated, and if so, proceeding to step (e), otherwise, to step (a); (e) retrieving the block execution state of the second function; (f) executing the instruction block of the second function according to the retrieved block execution state of the second function; and (g) returning to (a). The first function and the second function are activated by user input.

Information indicating whether the first function is activated in step (a) and the block execution state of the first function in step (b), and whether the second function is activated in step (d) and the block execution state of the second function in step (e), is stored in an event trace record.

In step (c), the instruction block of the first function is an instruction block that is recorded by the block execution state of the first function and that has not been executed yet, and, in step (f), the instruction block of the second function is an instruction block that is recorded by the block execution state of the second function and that has not yet been executed.

Step (c) further comprises recording information indicating that the instruction block of the first function has been executed by updating the event trace record, and step (f) further comprises recording information indicating that the instruction block of the second function has been executed by updating the event trace record.

The method for operation scheduling, after step (c) and before step (d), further comprises the following steps: (c-1) initiating the block execution state of the first function to record information indicating that the first function is not activated and all instruction blocks of the first function have not been executed when the block execution state of the first function indicates that all instruction blocks of the first function are completely executed. The method for operation scheduling, after step (f), further comprises: (f-1) initiating the block execution state of the second function to record information indicating that the second function is not activated and all instruction blocks of the second function have not been executed when the block execution state of the second function indicates that all instruction blocks of the second function are completely executed.

The display apparatus can be a CRT display, a plasma display panel (PDP) display, a liquid crystal display (LCD), an organic light-emitting diode displays (OLED) or a TV box.

A system for operation scheduling comprising a storage device and a processing unit is provided. The storage device stores information regarding block execution states of a first function and a second function. Each function corresponds to an instruction set. Each instruction set comprising at least one instruction block corresponds to a block execution state. The processing unit retrieves the block execution state corresponding to the first function, and executes one instruction block of the first function according to the block execution state corresponding to the first function when detecting that the first function is activated. The processing unit retrieves the block execution state corresponding to the second function, and executes one instruction block of the second function according to the block execution state corresponding to the second function when detecting that the second function is activated and a time has been reached.

The system for operation scheduling further comprises an input device. The input device couples to the processing unit, and activates the first function and the second function. The storage device stores an event trace record storing information indicating whether the first and the second functions are activated, and the block execution states of the first and second functions. The processing unit acquires the information by retrieving the event trace record.

The system for operation scheduling further comprises a timer. The storage device stores a counter flag comprising information indicating that the timer has reached a particular time. The processing unit recognizes whether the timer has reached a particular time by detecting the counter flag. The processing unit sets the timer to zero and initiates the counter flag after detecting the second function, enabling the counter flag to comprise information indicating that the timer has not yet reached the particular time.

Each instruction block comprises a record refresh instruction for updating information regarding the block execution state of the first function or the second function in the event trace record to indicate whether execution of the instruction block of the first function or the second function is complete. The processing unit initiates the event trace record to indicate that the first or second function is not executed when the event trace record comprises information indicating that execution of the first or second function is complete.

### BRIEF DESCRIPTION OF DRAWINGS

The invention will become more fully understood by referring to the following detailed description with reference to the accompanying drawings, wherein:

Fig. 1 is a diagram of the system architecture of an embodiment of an operation scheduling system;

Fig. 2 is a diagram of the architecture of an embodiment of an operation scheduling system;

Fig. 3 is a diagram of an embodiment of a pseudo code template for function modules;

Fig. 4 is a diagram of exemplary pseudo codes of a scheduling control module.

### DETAILED DESCRIPTION

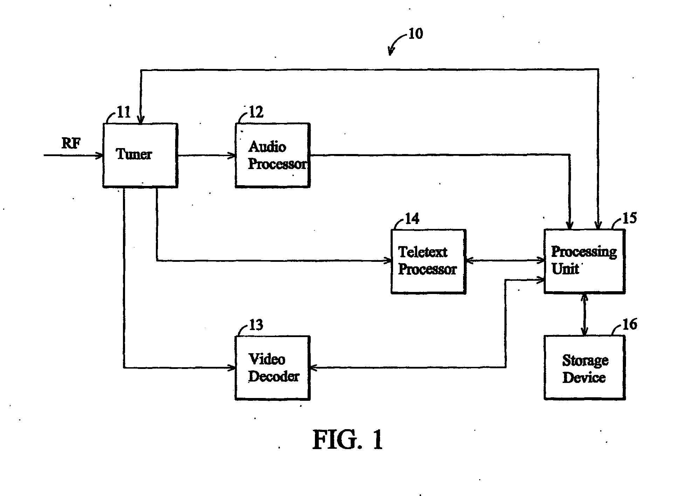

Fig. 1 is a diagram of the system architecture of an embodiment of an operation scheduling system 10 comprising a tuner 11, an audio processor 12, a video decoder 13, a teletext processor 14, a processing unit 15 and a storage device 16. The operation scheduling system 10 may be installed in TV boxes, or various display apparatuses such as CRT displays, plasma display panel (PDP) displays, liquid crystal displays (LCDs), organic light-emitting diode displays (OLEDs) and others. The storage device 16 may comprise read only memory (ROM), flash memory or random access memory (RAM) for storing program modules executed by the processing unit 15. The processing unit 15 loads and executes program modules, with the tuner 11, audio processor 12, video decoder 13 and teletext processor 14, to complete operation scheduling. The tuner 11 locks on to a particular frequency and acquires video and audio signals carried on the frequency. The teletext processor 14 acquires the teletext signals.

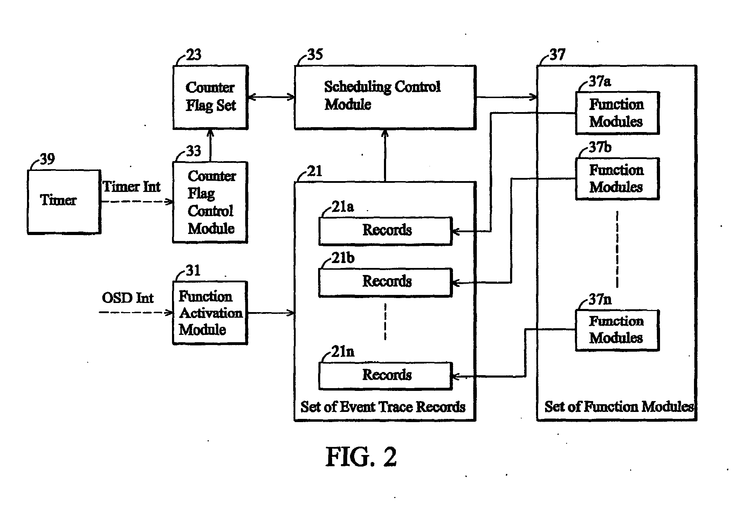

Fig. 2 is a diagram of the architecture of an embodiment of an operation scheduling system. The storage device 16 stores event trace records 21a to 21n, a counter flag set 23, a function activation module 31, a counter flag control module 33, a scheduling control module 35, and function modules 37a to 37n.

The event trace records 21a to 21n respectively correspond to function modules 37a to 37n, and each event trace record comprises three fields: a function activation flag, a block identifier and an execution completion flag. The function activation flag stores information indicating whether the corresponding function module has been triggered. The block identifier stores a block identifier of the last executed instruction block. The execution completion flag stores whether the corresponding function module has been completely executed. For example, an event trace record 21a storing a function activation flag "true", a block identifier "3", and an execution completion flag "false" indicates that the corresponding function module 37a has been triggered by a user, the last executed instruction block is an instruction block of the function module 37a, identified by the block identifier "3", and execution of the entire function module 37a is not complete. The event trace records 21a to 21n are preferably and respectively initiated to store a function activation flag "false", a block identifier "0", and an execution completion flag "flag". It is to be understood that the event trace records 21a to 21n can be implemented in various data structures, such as file records, a two-dimensional array, a data table, a linked list or others.

The counter flag set 23 comprises one or more counter flags, and each counter flag stores "true" or "false" indicating whether a timer 39 has reached a particular time. For example, a "true" ten millisecond flag indicates that timer 39 has reached ten milliseconds, and a "false" one hundred millisecond flag indicates timer 39 has not reached one hundred milliseconds. All counter flags initially storing "false" indicate that the timer 39 has not reached any times.

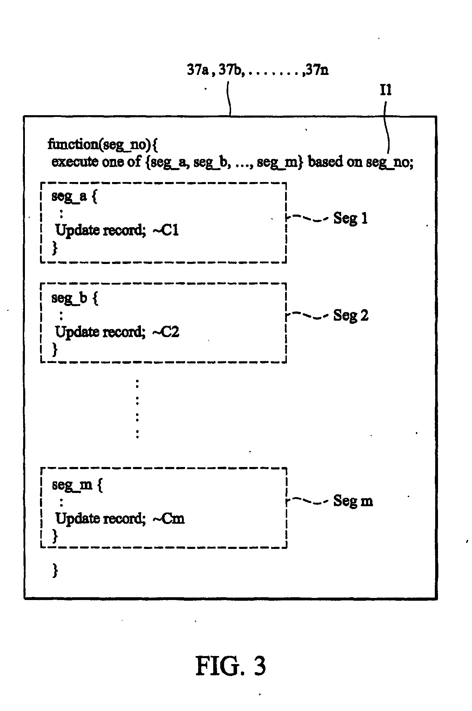

Function modules 37a to 37n store executable program codes for various functions, such as selecting a particular program, swapping program configuration data, automated program installation, update, or others. Fig. 3 is a diagram of an embodiment of a pseudo code template for function modules. For one of the function modules 37a to 37n, executable program codes thereof for performing a particular function can be divided into multiple instruction blocks Seg1 to Segm. A termination code "}" in each instruction block of executable program code indicates the end of the instruction block. Each instruction block also comprises an event modification instruction, such C1, and C2 to Cm, before each termination code for updating a block identifier and/or an execution completion flag of a corresponding event trace record. For example, the event modification instruction C1 updates a block identifier of one of event trace records 21a to 21n with "1", and the event modification instruction Cm respectively updates a block identifier and an execution completion flag of one of event trace records 21a to 21n with "m" and "true". The function module may further comprise a block selection instruction I1 for selecting and executing one of instruction blocks Seg1 to Segm according to an input parameter Seg_no corresponding to the selected instruction block.

The function activation module 31 receives an OSD (on-screen display) interrupt comprising information indicating that a function, such as switching to another program, swapping for program configuration data, automated program installation, update, or similar, has been triggered by a user. The function activation module 31 then updates the function activation flag of the corresponding event trace record with "true" according to the information of the received OSD interrupt, indicating that a particular function has been triggered.

The counter flag control module 33 receives a timer interrupt comprising information indicating that the timer 39 has reached a particular time, such as ten milliseconds, one hundred milliseconds, or similar. And then, the counter flag control module 33 updates the corresponding counter flag with "true" according to the information of the received timer interrupt, indicating that a particular time has been reached.

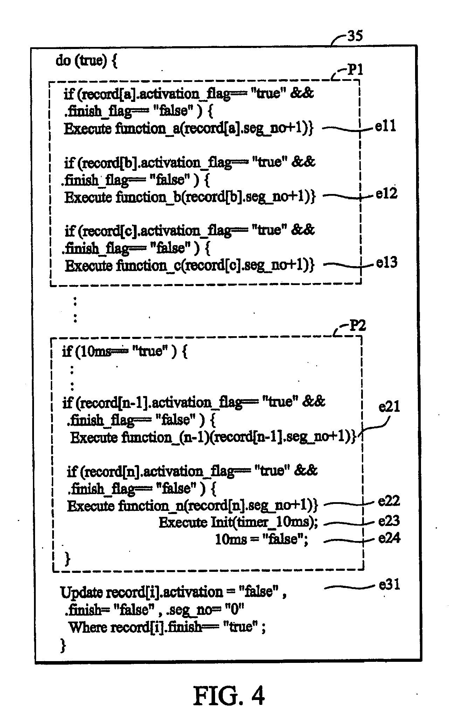

The scheduling control module 35 arranges the execution order for instruction blocks of the function modules 37a to 37n. When the scheduling control module 35 is loaded and executed by the processing unit 15, the processing unit 15 selectively loads a particular instruction block of one of the function modules 37a to 37n with reference to information provided by one of the event trace records 21a to 21n (in some embodiments, with further reference to information provided by the counter flag set 23). The function modules 37a to 37n are grouped into two categories, high priority and low priority. After a function module with the high priority is triggered by a user, a particular instruction block thereof is executed in a predetermined execution order. A particular instruction block of a function module with the low priority is executed after not only the function module has been triggered by a user, but also the timer 39 has reached a specific time. In the following example, the specific time is set to ten ms (milliseconds). Fig. 4 is a diagram of exemplary pseudo codes of a scheduling control module. The scheduling control module comprises an indefinite loop for repeatedly arranging the execution order for the relevant instruction blocks of function modules 37a to 37n. In the infinite loop, instructions of function modules are grouped into two blocks, a high priority block P1 and a low priority block P2. It is determined whether an instruction e11, e12, or e13 of the high priority block P1 is executed by inspecting whether the function activation flag "activation_flag" of the corresponding event trace record, record[a], record[b], or record[c], is "true", and whether the execution completion flag "finish_flag" thereof is "false". When determining that the function activation flag of the event trace record is "true" and the execution completion flag thereof is "false", the scheduling control module 39 increases the block identifier "seg_no" thereof by one, provides the updated block identifier to the corresponding function module as an input parameter, and executes the function module so that the function module can execute the next instruction block corresponding to the updated block identifier "seg_no".

Instructions e21 and e22 of the low priority block P2 can further be executed when a counter flag "10ms" is "true". It is determined whether an instruction e21, or e22 of the low priority block P2 is executed by inspecting whether the function activation flag "activation_flag" of the corresponding event trace record, record[n-1], or record[n], is "true", and whether the execution completion flag "finish_flag" thereof is "false". When determining that the function activation flag of the event trace record is "true" and the execution completion flag thereof is "false", the scheduling control module 39 increases the block identifier "seg_no" thereof by one, provides the updated block identifier to the corresponding function module as an input parameter, and executes the function module so that the function module can execute the next instruction block corresponding to the updated block identifier "seg_no". Moreover, after completely inspecting all execution conditions in the low priority block, a timer initiation instruction e23 is executed to set the timer 39 to zero, and a timer flag initiation instruction e24 is executed to set the timer flag "10ms" to "false".

The scheduling control module 35 has to execute a record refresh instruction e31 before the end of each loop. When executing the record refresh instruction e31, event trace records with execution completion flags "finish_flag" being "true" are detected, and all the detected event trace records are initiated (i.e. function activation flags "activation_flag" of the detected event trace records are set to "false", block identifiers "seg_no" thereof are set to zero, and execution completion flags "finish_flag" are set to "false").

Certain terms are used throughout the description and claims to refer to particular system components. As one skilled in the art will appreciate, consumer electronic equipment manufacturers may refer to a component by different names. This disclosure does not intend to distinguish between components that differ in name but not function.

Although the invention has been described in terms of preferred embodiment, it is not limited thereto. Those skilled in this technology can make various alterations and modifications without departing from the scope and spirit of the invention. Therefore, the scope of the invention shall be defined and protected by the following claims and their equivalents.

## Claims

1. A method for operation scheduling, employed by a display apparatus capable of performing a first function and a second function, each of the first and second functions corresponding to an instruction set, each of the instruction sets comprising at least one instruction block, each of the instruction sets corresponding to a block execution state, the method comprising:
(a) determining whether the first function is activated, if so, proceeding to step (b), otherwise, to step (d);
(b) retrieving the block execution state corresponding to the first function;
(c) executing the instruction block of the first function according to the block execution state corresponding to the first function;
(d) determining whether the second function is activated and a time has been reached, if so, proceeding to step (e), otherwise, to step (a);
(e) retrieving the block execution state corresponding to the second function;
(f) executing the instruction block of the second function according to the block execution state corresponding to the second function; and
(g) proceeding to step (a).

2. The method as claimed in claim 1, wherein the first function and the second function are activated by user input.

3. The method as claimed in claim 1 wherein, information indicating whether the first function is activated in step (a) and the block execution state of the first function in step (b), and indicating whether the second function is activated in step (d) and the block execution state of the second function in step (e), is stored in an event trace record.

4. The method as claimed in claim 1 wherein, in step (c), the instruction block of the first function and, in step (f), the instruction block of the second function refer to what has not been executed yet, which is recorded by the block execution states of the first and the second functions.

5. The method as claimed in claim 3, wherein step (c) further comprises recording information indicating that the instruction block of the first function has been executed by updating the event trace record, and step (f) further comprises recording information indicating that the instruction block of the second function has been executed by updating the event trace record.

6. The method as claimed in claim 5, after step (c) and before step (d), further comprising:
(c-1) initiating the block execution state of the first function to record information indicating that the first function is not activated and the instruction block of the first function has not been executed when the block execution state of the first function indicates that the instruction block of the first function is completely executed; and
after step (f), further comprising:
(f-1) initiating the block execution state of the second function to record information indicating that the second function is not activated and the instruction block of the second function has not been executed when the block execution state of the second function indicates that the instruction block of the second function is completely executed.

7. The method as claimed in claim 1 wherein the display apparatus is a CRT display, a plasma display panel (PDP) display, a liquid crystal display (LCD), an organic light-emitting diode displays (OLED) or a TV box.

8. A system for operation scheduling, comprising:
a storage device storing a first function and a second function, each of the first and second functions corresponding to an instruction set, each of the instruction sets comprising at least one instruction block, each of the instruction sets corresponding to a block execution state; and
a processing unit coupling to the storage device, retrieving the block execution state corresponding to the first function, and executing the instruction block of the first function according to the block execution state corresponding to the first function when detecting that the first function is activated, the processing unit retrieving the block execution state corresponding to the second function, and executing the instruction block of the second function according to the block execution state corresponding to the second function when detecting that the second function is activated and a time has been reached.

9. The system as claimed in claim 8, further comprising an input device, coupling to the processing unit and activating the first function and the second function.

10. The system as claimed in claim 8, wherein the storage device stores an event trace record storing information indicating whether the first and the second functions are activated and indicting the block execution states of the first and second functions, and the processing unit acquires the information by retrieving the event trace record.

11. The system as claimed in claim 8, further comprising a timer, wherein the storage device stores a counter flag, the counter flag comprises information indicating whether the timer has reached the time, and the processing unit recognizes whether the timer has reached the time by detecting the counter flag.

12. The system as claimed in claim 11, wherein the processing unit sets the timer to zero and initiates the counter flag after detecting the second function, enabling the counter flag to comprise information indicating that the timer has not reached the time.

13. The system as claimed in claim 8, wherein each of the instruction blocks comprises a record refresh instruction for updating information regarding the block execution state of the first function or the second function in the event trace record to indicate whether execution of the instruction block of the first function or the second function is complete.

14. The system as claimed in claim 13, wherein the processing unit initiates the event trace record to indicate that the first or second function is not executed when the processing unit detects that the event trace record comprises information indicating that execution of the first or second function is complete.
